# EUROPEAN PATENT APPLICATION

(11) **EP 4 412 130 A1**
(43) Date of publication of application: **07.08.2024**
(21) Application number: 22874308.4
(22) Date of filing: 21.06.2022
(51) Int. Cl.: H04L 5/00

(54) **METHOD FOR TRANSMITTING DEMODULATION REFERENCE SIGNAL, NODE, AND STORAGE MEDIUM**

(30) Priority: 30.09.2021 CN 202111165681
(71) Applicant: ZTE Corporation, Shenzhen, Guangdong 518057 (CN)
(72) Inventor: XIAO, Huahua, Shenzhen, Guangdong 518057 (CN); JIANG, Chuangxin, Shenzhen, Guangdong 518057 (CN); WU, Hao, Shenzhen, Guangdong 518057 (CN); LU, Zhaohua, Shenzhen, Guangdong 518057 (CN); MEI, Meng, Shenzhen, Guangdong 518057 (CN)
(74) Representative: Vossius & Partner Patentanwälte Rechtsanwälte mbB
(86) International application number: PCT/CN2022/100209
(87) International publication number: WO 2023/050911

(57) **Abstract**

The present application discloses a method, an apparatus, a node, and a storage medium for transmitting demodulation reference signals. The method of transmitting demodulation reference signals includes: configuring demodulation reference signal parameters (S101); dividing resource elements corresponding to at least one code division multiplexing group into K resource elements sets based on the demodulation reference signal parameters, wherein K is an integer greater than 1 (S102); and transmitting a first category of demodulation reference signals on at least one set of resource elements among the K sets of resource elements (S103).

## Description

### CROSS-REFERENCE TO RELATED APPLICATION(S)

This application is proposed based on and claims priority to Chinese Patent Application No. 202111165681.3, filed September 30, 2021, the disclosure of which is incorporated herein by reference in its entirety.

### FIELD

The present application relates to the field of wireless communication technology, and in particular to a method, a node and a storage medium for transmitting demodulation reference signals.

### BACKGROUND

Currently, in the field of multi-antenna technology, a communication terminal may estimate a channel corresponding to transmission of data using demodulation reference signals (DMRS), and demodulate the transmitted data using the estimated channel. In order to improve the accuracy of channel estimation, existing DMRS signal ports usually correspond to multiple Resource Elements (REs), e.g., a port of DMRS of type 1 (DMRS type 1) occupies at least 6 REs. Therefore, another type of DMRS design scheme can be proposed while the wireless communication performance can be guaranteed.

### SUMMARY

Embodiments of the present application propose a method, an apparatus, a node, and a storage medium for transmitting demodulation reference signals, which can reduce the density of REs for transmitting DMRS; and for a high-performance terminal, the resource overhead for transmitting DMRS can be reduced, while the wireless communication performance can be guaranteed.

Embodiments of the present application provide a method of transmitting demodulation reference signals, the method including: configuring demodulation reference signal parameters; dividing resource elements corresponding to at least one code division multiplexing group into K sets of resource elements based on the demodulation reference signal parameters, wherein K is an integer greater than 1; and transmitting the first category of demodulation reference signals on at least one set of resource elements among the K sets of resource elements.

Embodiments of the present application provide a method of transmitting demodulation reference signals, the method including: transmitting demodulation reference signal parameters; dividing resource elements corresponding to at least one code division multiplexing group into K sets of resource elements based on the demodulation reference signal parameters, wherein K is an integer greater than 1.

Transmitting a first category of demodulation reference signals on at least one set of resource elements among the K sets of resource elements.

Embodiments of the present application provide an apparatus for transmitting demodulation reference signals, which may be integrated in a base station, the apparatus including: a configuration module for configuring demodulation reference signal parameters; a processing module for dividing resource elements corresponding to at least one code division multiplexing group into K sets of resource elements based on the demodulation reference signal parameters, wherein K is an integer greater than 1; and a transmission module for transmitting a first category of demodulation reference signals on at least one set of resource elements among the K sets of resource elements.

Embodiments of the present application provide an apparatus for transmitting demodulation reference signals, which may be integrated in a user terminal, the apparatus including: a first transmission module for transmitting demodulation reference signal parameters; a second processing module for dividing a resource element corresponding to at least one code division multiplexing group into K sets of resource elements based on the demodulation reference signal parameters, wherein K is an integer greater than 1.

A second transmission module, for transmitting a first category of demodulation reference signals on at least one set of resource elements among the K sets of resource elements.

Embodiments of the present application provide a communication node including: a processor, when executing computer program the processor implements the method of transmitting demodulation reference signals as provided in embodiments of the present application.

Embodiments of the present application provide a readable and writable storage medium, the readable and writable storage medium has computer program stored thereon, which when executed by a processor the computer program implements the method of transmitting demodulation reference signals as provided in embodiments of the present application.

Embodiments of the present application provide a method, an apparatus, a node, and a storage medium for transmitting demodulation reference signals, the method including: dividing resource elements corresponding to at least one code division multiplexing group into K sets of resource elements based on the demodulation reference signal parameters, wherein K is an integer greater than 1; and transmitting a first category of demodulation reference signals on at least one set of resource elements among the K sets of resource elements. In this way, for high-performance terminals, the wireless communication performance can be guaranteed while reducing the density of DMRS REs, and the reduction of the accuracy of channel estimation can be avoided.

### BRIEF DESCRIPTION OF THE DRAWINGS

FIG. 1 is a flowchart of a method of transmitting demodulation reference signals provided by embodiments of the present application.
FIG. 2 is a schematic diagram of a pattern for transmitting the first category of demodulation reference signals determined in accordance with the spacing parameter provided by embodiments of the present application.
FIG. 3 is a schematic diagram of another pattern for transmitting the first category of demodulation reference signals determined in accordance with the spacing parameter provided by embodiments of the present application.
FIG. 4 is a schematic diagram of yet another pattern for transmitting the first category of demodulation reference signals determined in accordance with the spacing parameter provided by embodiments of the present application.
FIG. 5 is a schematic diagram of a pattern for transmitting the first category of demodulation reference signals determined in accordance with the number of resource elements and the offset for the sets of resource elements when the number of transmission layers is less than or equal to 2, as provided by embodiments of the present application.
FIG. 6 is a schematic diagram of a pattern for transmitting the first category of demodulation reference signals determined in accordance with the number of resource elements and the offset for the sets of resource elements when the number of another kind of transmission layers is less than or equal to 2, as provided by embodiments of the present application.
FIG. 7 is a schematic diagram of a pattern for transmitting the first category of demodulation reference signals determined in accordance with the number of resource elements and the offset for the sets of resource elements when the number of transmission layers is 3 or 4, as provided by embodiments of the present application.
FIG. 8 is a schematic diagram of a pattern for transmitting the first category of demodulation reference signals determined in accordance with the number of resource elements and the offset for the sets of resource elements when the number of another kind of transmission layers is 3 or 4, as provided by embodiments of the present application.
FIG. 9 is a schematic diagram of a pattern for transmitting the first category of demodulation reference signals determined in accordance with the number of resource elements and the offset for the sets of resource elements when the number of a further kind of transmission layers is 3 or 4, as provided by embodiments of the present application.
FIG. 10 is a schematic diagram of comparison of an existing pattern and a pattern with a lower density of REs provided by embodiments of the present application.
FIG. 11 is a schematic diagram of comparison of another kind of existing pattern and a pattern with a different lower density of REs provided by embodiments of the present application.
FIG. 12 is a flowchart of another method of transmitting demodulation reference signals provided by embodiments of the present application.
FIG. 13 is a schematic diagram of a structure of an apparatus for transmitting demodulation reference signals integrated at a base station side provided by embodiments of the present application.
FIG. 14 is a schematic diagram of a structure of another apparatus for transmitting demodulation reference signals integrated at a base station side provided by embodiments of the present application.
FIG. 15 is a schematic diagram of a structure of an apparatus for transmitting demodulation reference signals integrated at a user terminal side provided by embodiments of the present application.
FIG. 16 is a schematic diagram of a structure of another apparatus for transmitting demodulation reference signals integrated at a user terminal side provided by embodiments of the present application.
FIG. 17 is a schematic diagram of a structure of a communication node provided by embodiments of the present application.

### DETAILED DESCRIPTION OF EMBODIMENTS

In order to make the objects, technical solutions, and advantages of the present application clearer and more understandable, embodiments of the present application will be described in detail in the following in connection with the accompanying drawings. It should be noted that the embodiments and the features in the embodiments of the present application may be combined with each other in any manner without conflict.

Furthermore, in the embodiments of the present application, the words "optionally" or "exemplarily" are used to represent as examples, illustrations, or descriptions. Any embodiment or design solution described as "optionally" or "exemplarily" in the embodiments of the present application should not be construed as being preferred or advantageous over other embodiments or design solutions. Rather, the use of the words "optionally" or "exemplarily" is intended to present the relevant concepts in a specific manner.

In order to facilitate understanding of the solutions provided by the embodiments of the present application, relevant concepts involved in the present solution are explained and illustrated herein, for example, multi-antenna technology (e.g., joint transmission by multiple transmission nodes) is widely used in various wireless communication systems, and can effectively improve the performance of the wireless communication system. Ways in which a multi-antenna system improves the performance of a communication system may include, but are not limited to, multi-antenna diversity and multiplexing, where multiplexing is transmitting simultaneously different data streams on the same time-frequency resources, such as multiple-input-multiple-output (MIMO) transmitting multi-layer data streams on the same time-frequency resources, and Multiple User MIMO transmits data over the same time and frequency resources for multiple user terminals. Multi-antenna technique demodulates the multi-layer data using demodulation reference signals at a user terminal side. For a user terminal, the user terminal may be a cellular phone, a cordless phone, a Personal Digital Assistant (PDA), a handheld device with wireless communication capabilities, a computing device or other processing device connected to a wireless modem, an in-vehicle device, a wearable device, or terminal devices in a 5G network or a future 5G above network, etc., which are not limited by the present embodiments. For a base station, the base station may be an Evolutional Base Station (Evolutional Node B, eNB, or eNodeB) in a Long Term Evolution (LTE), in a Long Term Evolution Advanced (LTEA), a base station device in a 5G network, or a base station in a future communication system, etc., and the base station may include various macro base stations, micro base stations, home base stations, wireless pull-outs, routers, or various network-side devices such as a primary cell and a secondary cell.

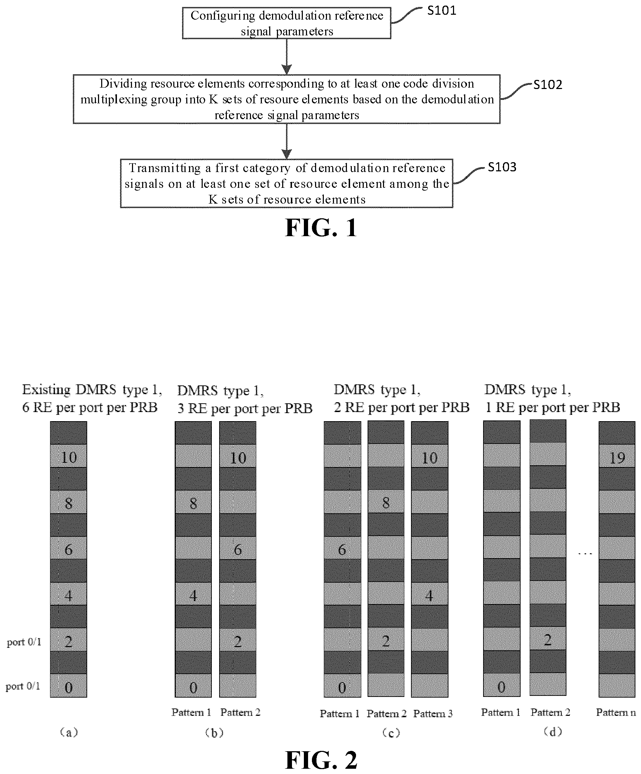

FIG. 1 is a flowchart of a method of transmitting demodulation reference signals provided by embodiments of the present application, which may be performed in software and/or hardware by an apparatus for transmitting the demodulation reference signals, which may be integrated in a communication node (e.g., a network-side device such as a base station) in a wireless communication network, for re-determining sets of resource elements for transmitting a first category of demodulation reference signals based on the demodulation reference signal parameters. For high-performance terminals, such as terminals supporting artificial intelligence demodulation, the wireless communication performance can be guaranteed while reducing the density of REs for transmitting DMRS, and the reduction of the accuracy of channel estimation can be avoided. As shown in FIG. 1, the method may include, but is not limited to, the following:
S101, configuring demodulation reference signal parameters.

For example, the demodulation reference signal parameters may comprise a spacing parameter L.

S102, dividing the resource elements corresponding to at least one code division multiplexing group into K sets of resource elements based on the demodulation reference signal parameters.

The spacing parameter L of the demodulation reference signal parameters may be used to divide the resource elements corresponding to the code division multiplexing group into the K sets of resource elements, wherein K is an integer greater than 1 and L is an integer.

S103, transmitting a first category of demodulation reference signals on at least one set of resource elements among the K sets of resource elements.

After dividing the resource elements corresponding to the code division multiplexing group into a plurality of sets of resource elements based on the demodulation reference signal parameters, the sets of resource elements with lower density of REs can be obtained, and the first category of demodulation reference signals may be transmitted on the divided sets of resource elements. In this way, for high-performance terminals, the wireless communication performance can be guaranteed while reducing the density of DMRS REs, and the reduction of the accuracy of channel estimation can be avoided.

It is to be noted that transmission in the embodiments of the present application can be understood as transmitting or receiving in a wireless communication network system, i.e., signal transmission of a communication node represents transmitting a signal or receiving a signal, or it can be transmitting data or receiving data. Further, in the embodiment of the present application, performing an action of signal transmission as a communication node at the base station side may be understood as transmitting a signal, for example, transmitting the first category of demodulation reference signals on at least one set of resource elements among the K sets of resource elements in S103 described above, i.e., it may be understood as transmitting the first category of demodulation reference signals on at least one set of resource elements among the K sets of resource elements. Accordingly, as a communication node transmitting a signal at the user terminal side, it is understood that the node receives a signal transmission transmitted from a base station side. The signal transmission herein may also be data transmission, such as a physical downlink shared channel transmission.

The above code division multiplexing group may be used for transmitting a second category of demodulation reference signals on a set of resource elements, where the set of resource elements of the second category of demodulation reference signals may be understood as a set of REs with higher density, e.g., DMRS type 1 occupying 6 REs per port on a symbol of a Physical Resource Block (PRB). The sets of resource elements for transmitting the first category of demodulation reference signals may be understood as sets of REs with lower density, i.e., the sets of resource elements obtained after dividing the set of resource elements for transmitting the second category of demodulation reference signals based on the spacing parameter L of the demodulation reference signal parameters, where a pattern corresponding to the sets of resource elements occupies less number of REs on a symbol per PRB than the number of REs contained in a pattern corresponding to the set of resource elements of the second category of demodulation reference signals. It is to be noted that in embodiments of the present application, a pattern corresponds to set(s) of resource elements for transmitting demodulation reference signals, where the pattern and the set(s) of resource elements for transmitting the demodulation reference signals may be interchangeable and belong to equivalent concepts.

It can be understood that after dividing the resource elements corresponding to the code division multiplexing group based on the spacing parameter L, for the resource elements of the code division multiplexing group, respective resource elements spaced every L resource elements belong to one set of resource elements.

For example, after the above division, the values for the number of sets of resource elements K and the spacing parameter L may comprise at least one of the following: K=2, L=1; K=3, L=2; K=6, L=5; K=3, L=0; or K=2, L=0. And L=0 indicates that, as resource elements in the code division multiplexing group, the resource elements of corresponding sets of resource elements are adjacent to each other; or the REs of corresponding sets of resource elements are separated by one RE on the entire symbol.

In one example, the above demodulation reference signal parameters may further comprise a number of resource elements N in a set of resource elements, i.e., for resource elements corresponding to the code division multiplexing group, every N resource elements are generated as a set of resource elements, wherein K*N=T, T is the number of resource elements in the code division multiplexing group, and K and N are positive integers greater than 1, i.e., the number of resource elements in the code division multiplexing group is divided into K sets of resource elements, and each set of resource elements contains N resource elements.

For example, the values for the number of resource elements N in the set of resource elements and the number of the divided sets of resource elements K may comprise at least one of the following: N=2, K=3; N=3, K=2; N=4, K=2; or N=8, K=2. Here, the corresponding code division multiplexing group in both cases of N=4, K=2 and N=8, K=2 includes two DMRS symbols.

In one example, the demodulation reference signal parameters may further comprise an offset for the sets of resource elements, where the sets of resource elements for transmitting the first category of demodulation reference signals may be determined based on the offset for the sets of resource elements.

For example, as shown in FIG. 2-FIG. 4, there are schematic diagrams of patterns corresponding to the sets of resource elements for transmitting the first category of demodulation reference signals determined based on the above-mentioned spacing parameter L. On each existing DMRS symbol, 12 REs on each physical resource are divided into two Code Division Multiplexing Groups (CDM Groups), namely code division multiplexing group 0 (CDM group 0) and code division multiplexing group 1 (CDM group 1). On each DMRS symbol, each CDM Group includes 6 REs per PRB, and each CDM Group may transmit DMRS on at most N1 ports, the N1 ports are distinguished by CDMs, where N1 is at most 2 when the CDM Groups include one DMRS symbol, and N1 is at most 4 when the CDM Groups include two DMRS symbols. FIG. 2 is a pattern with lower density of REs designed for ports 0 and 1 when the number of transmission layers is less than or equal to 2, i.e., a RE pattern design on the code division multiplexing group 0. In an embodiment, in FIG. 2, (a) is a schematic diagram of an existing DMRS type 1 occupying 6 REs per port on a symbol of a PRB, corresponding to the set of REs used for transmitting the second category of demodulation reference signals on CDM group 0. In FIG. 2, (b) is a schematic diagram of two different kinds of pattern styles when DMRS type 1 occupies 3 REs per port on a symbol of a PRB; that is, for the case of the spacing parameter L = 1, in the 6 REs of the code division multiplexing group, respective resource elements spaced every one RE belong to a set of resource elements, with a total of K = 2 sets of resource elements. Here, on the entire DMRS symbol, the resource elements corresponding to every other three REs form a set of resource elements. In FIG. 2, (c) is a schematic diagram of different pattern styles when DMRS type 1 occupies 2 REs per port on a symbol of a PRB; that is, for the case of the spacing parameter L = 2, in the 6 REs of the code division multiplexing group, respective resource elements spaced every two REs belong to a set of resource elements, with a total of K = 3 sets of resource elements. Here, on the entire DMRS symbol, the resource elements corresponding to every other five REs form a set of resource elements. In FIG. 2, (d) is a schematic diagram of different pattern styles when DMRS type 1 occupies 1 RE per port on a symbol of a PRB; that is, for the case of the spacing parameter L=5, in the 6 REs of the code division multiplexing group, respective resource elements spaced every five REs belong to a set of resource elements, with a total of K=6 sets of resource elements. Here, one set of resource elements corresponds to one kind of pattern. In FIG. 2, based on the comparison of (a) with (b)-(d), it can be seen that in this embodiment of the present application, the designed pattern corresponding to the sets of resource elements for transmitting the first category of demodulation reference signals has less number of REs on a symbol per PRB than the number of REs in the existing pattern, i.e., the pattern of the first category of demodulation reference signals is a pattern with lower density of REs.

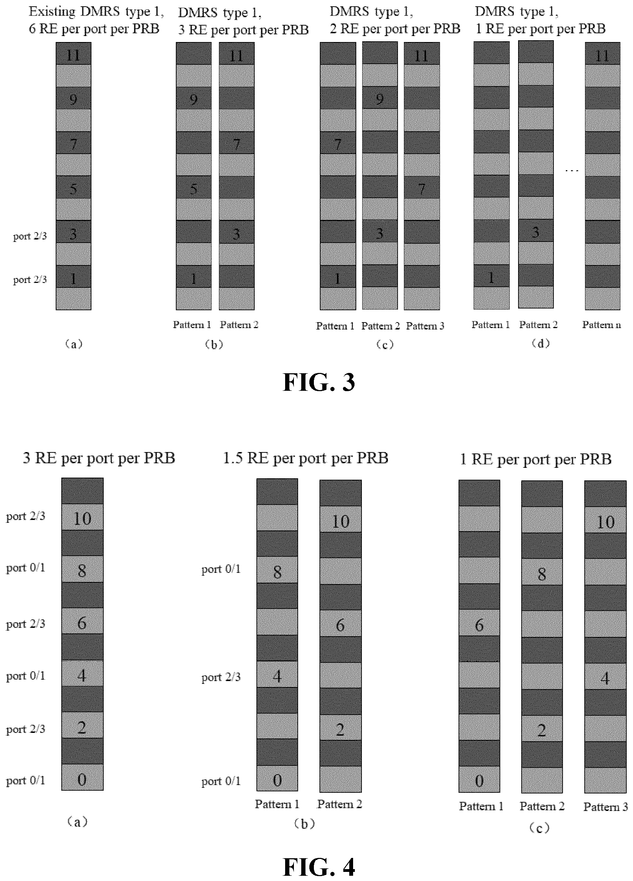

Similarly, FIG. 3 is a pattern with lower density of REs designed for ports 2 and 3 when the number of transmission layers is less than or equal to 2, i.e., the set(s) of REs on CDM Group 1, and how to divide CDM Group 1 into K sets of REs based on the spacing parameter L of 1, 2, 5 respectively. In FIG. 3, (a) is a schematic diagram of an existing DMRS type 1 occupying 6 REs per port on a symbol of a PRB, and in FIG. 3, (b), (c), and (d) are the cases of DMRS type 1 occupying 3 REs, occupying 2 REs, and occupying 1 RE per port on a symbol of a PRB (corresponding to the cases of the spacing parameter L=1, 2, 5, and K = 2, 3, 6, respectively), the schematic diagrams of several different pattern styles are designed. In FIG. 3, based on the comparison of (b), (c), and (d) with (a) respectively, it can be seen that the number of REs in the pattern styles presented in (b), (c), and (d) of FIG. 3 is less than the number of REs in the existing pattern in (a), i.e., (b), (c), and (d) of FIG. 3 are pattern styles with lower density of REs.

FIG. 4 is a pattern for even-numbered (i.e., CDM Group 0) based REs design when the number of transmission layers is 3 or 4, where in FIG. 4, (a) is a schematic diagram of a pattern with a number of 3 REs per port on a symbol of a PRB, and in FIG. 4, (b) is a schematic diagram of a different pattern with a number of 1.5 REs per port on a symbol of a PRB, and in FIG. 4, (c) is a schematic diagram of three kinds of pattern styles with a number of 1 RE per port on a symbol of a PRB. A pattern of the first category of demodulation reference signals presented in FIG. 4 is a pattern with lower density of REs compared to the existing art, which occupies 6 REs per port on a symbol of a PRB. Accordingly, in the same manner as FIG. 4, a pattern with lower density of DMRS can be designed in the same manner on odd-numbered REs, where the division of REs on CDM Group 1 may be similar to the division of REs on CDM Group 0, and will not be repeated herein.

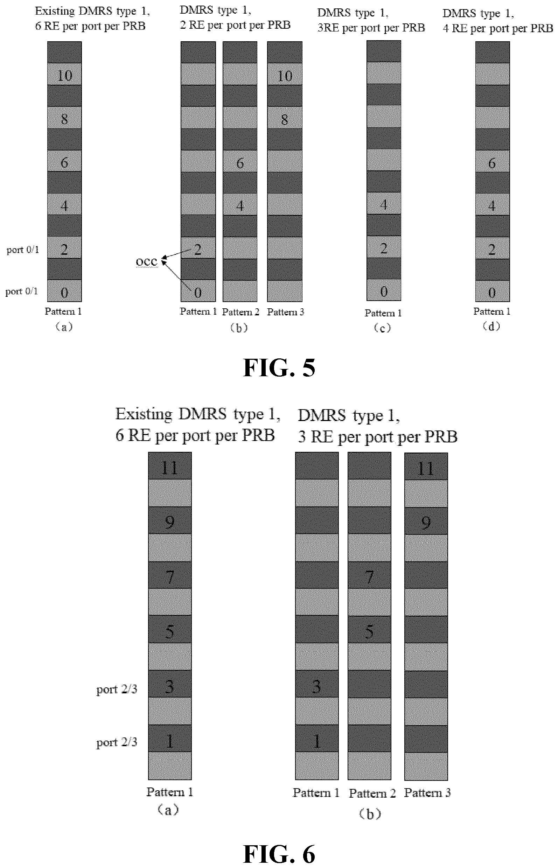

For example, as shown in FIG. 5-FIG. 9, there are schematic diagrams of patterns corresponding to the sets of resource elements for transmitting the first category of demodulation reference signals determined based on the number of resource elements N and the offset for the sets of resource elements. In an embodiment, FIG. 5 is a schematic diagram of a pattern with lower density of REs designed for ports 0 and 1 when the number of transmission layers is less than or equal to 2, corresponding to the division of the resource elements of CDM group 0. In FIG. 5, (a) is a schematic diagram of existing DMRS type 1 occupying 6 REs per port on a symbol of a PRB, and in FIG. 5, (b) is a schematic diagram of three different kinds of pattern styles when DMRS type 1 occupies 2 REs per port on a symbol of a PRB, here the amount of offset is 4. The occ in the figure indicates that Orthogonal Cover Codes (OCC) are used to distinguish different ports within the same CDM Group, corresponding to the case of L=0, K=3, or the case of dividing the CDM Group according to the number of resource elements N in the set of resource elements, i.e., the case of N=2. In FIG. 5, (c) is a schematic diagram of a pattern style when DMRS type 1 occupies 3 REs per port on a symbol of a PRB, corresponding to the case of L=0, K=2, or the case of dividing the CDM Group according to the number of resource elements N in the set of resource elements, the case of N=3, where a different pattern corresponds to a group of sets of resource elements. In FIG. 5, (d) is a schematic diagram of a pattern style when DMRS type 1 occupies 4 REs per port on a symbol of a PRB, corresponding to the case of L=0, K=2, or the case of dividing the CDM Group according to the number of resource elements N in the set of resource elements, the case of N=4, where a different pattern corresponds to a group of sets of resource elements. For the division of the resource elements of CDM group 1, it is similar to the division of resource elements of CDM group 0 and will not be repeated herein. In FIG. 5, based on the comparison of (b) and (c) with (a) respectively, it can be seen that the pattern style of the first category of the demodulation reference signals configured in a manner of the RE groups and the amount of offset contains a lower density of REs compared to the existing pattern style.

FIG. 6 is a schematic diagram of a pattern with lower density of REs designed for ports 2 and 3 when the number of transmission layers is less than or equal to 2, corresponding to the division of the resource elements of CDM group 1. In an embodiment, in FIG. 6, (a) is a schematic diagram of existing DMRS type 1 occupying 6 REs per port on a symbol of a PRB, and in FIG. 6, (b) is a schematic diagram of three different kinds of pattern styles when DMRS type 1 occupies 2 REs per port on a symbol of a PRB, here the amount of offset is 4. It can be seen that in FIG. 6, (b) contains a lower density of REs compared to (a).

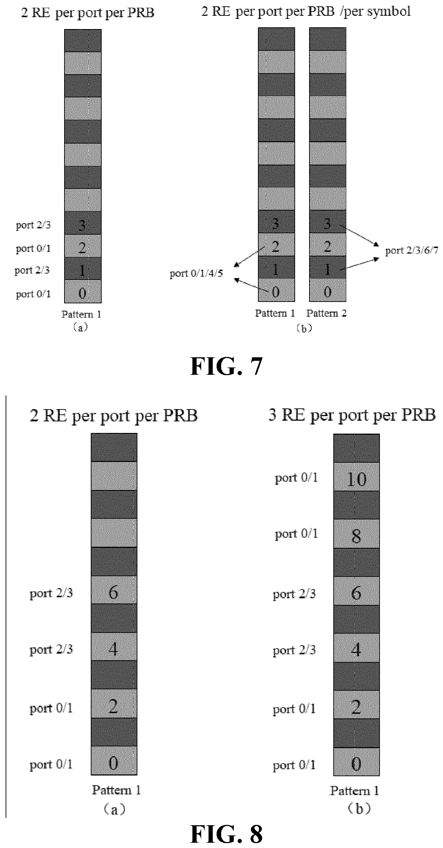

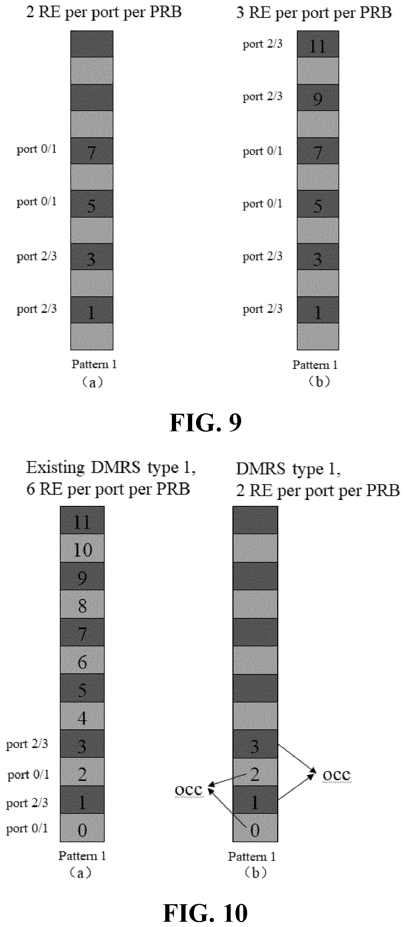

FIG. 7 is a schematic diagram of a pattern style of sets of resource elements for transmitting the first category of demodulation reference signals designed for different number of symbols when the number of transmission layers is 3 or 4. In an embodiment, in FIG. 7, (a) is a schematic diagram of a pattern style of designed DMRS type 1 occupying 2 REs per port on a symbol of a PRB, and in FIG. 7, (b) is a schematic diagram of a pattern style with regard to occupying REs on two symbols. In another embodiment, it is also possible to design pattern styles with regard to 3 or more symbols, where the pattern styles enable transmission of the first category of demodulation reference signals in a manner with lower density of REs. In FIG. 8, (a) is a schematic diagram of a pattern style of designed DMRS type 1 occupying 2 REs per port on a symbol of a PRB for even-numbered REs when the number of transmission layers is 3 or 4, and in FIG. 8, (b) is a schematic diagram of a pattern style of designed DMRS type 1 occupying 3 REs per port on a symbol of a PRB for even-numbered REs when the number of transmission layers is 3 or 4. In FIG. 9, (a) is a schematic diagram of a pattern style of designed DMRS type 1 occupying 2 REs per port on a symbol of a PRB for odd-numbered REs when the number of transmission layers is 3 or 4 layers, and in FIG. 9, (b) is a schematic diagram of a pattern style of designed DMRS type 1 occupying 3 REs per port on a symbol of a PRB for odd-numbered REs when the number of transmission layers is 3 or 4.

In one example, the above sets of resource elements for transmitting the first category of demodulation reference signals may further comprise a first set of resource elements (i.e., a first set of REs) and a second set of resource elements (i.e., a second set of REs), where the first set of resource elements is a set of resource elements used for transmitting the first category of demodulation reference signals, and the second set of resource elements is a set consisting of resource elements other than the first set of resource elements on symbols in which the code division multiplexing group is located.

In an embodiment, a transmission mode for the second set of REs may be indicated in any of the following ways, the transmission mode comprising one of the following, i.e., one of transmission of data, transmission of the first category of demodulation reference signals, or transmission of a second category of demodulation reference signals. For example, the transmission mode for the second set of REs may be determined in a default manner; alternatively, the transmission mode for the second set of REs may be determined based on at least one parameter of the first set of REs, where the parameter comprises: a port index corresponding to the first set of REs, a pattern index corresponding to the first set of REs, and an offset for the first set of REs; alternatively, the transmission mode for the second set of REs may be determined based on a physical layer signaling indication.

For example, assuming that the number of multiple terminals or the number of transmission layers is constant, an indication for the amount of offset is not required for a pattern of the set of REs corresponding to the first category of demodulation reference signals with the determined lower density of REs. In the case of resource multiplexing between a first type of terminals and a second type of terminals, whether an existing pattern or a designed pattern with lower density of REs is to be used can be indicated by Radio Resource Control (RRC) signaling or a 1bit Downlink Control Information (DCI), i.e., either (a) or (b) shown in FIG. 10, where an occ in the pattern shown in FIG. 10 (b) represents an orthogonal coverage code.

When scheduling terminals, a first type of terminals may be scheduled first, and a second type of terminals may be scheduled, where the first type of terminals may be understood as users supporting lower versions of protocols, and the second type of terminals may be understood as high-performance users supporting higher versions of protocols, such as terminals equipped with artificial intelligence demodulation. The transmission mode for the second set of REs may be determined in a default manner, which includes, but is not limited to, transmission of data in a manner specified by the protocol, a manner negotiated between a terminal and a base station, or other specified default manners. For example, there is a following rule that, by default, if the first type of terminals and the second type of terminals are scheduled on the same time and frequency resources, the first type of terminals may be assigned a port number with a smaller port index, and the second type of terminals may be assigned a port number after the assignment for the first type of terminals. Therefore, if the second type of terminals are scheduled through port 0 and/or 1, the second type of terminals may be considered by default to be the second type of terminals scheduled on both Code Division Multiplexing (CDM) group 0 and CDM group 1, where the REs used for transmitting the data on CDM group 0 and CDM group 1 are shown in (b) of FIG. 10. If the second type of terminals are scheduled through ports 2 and/or 3, the second type of terminals may also have multiple data REs on CDM group 1, except that it is not possible to distinguish whether or not the REs on CDM group 0 (i.e., the RE on {4,6,8,10}) may transmit data. Further, if the second type of terminals are scheduled on ports 0 and 1, REs on {4,6,8,10} may transmit data; alternatively, if the first type of terminals are scheduled on ports 0 and 1, the REs on {4,6,8,10} may not transmit data.

In another embodiment, it is also possible to consider by default that the REs on {4,6,8,10} above may not transmit data, or, to determine whether or not data may be transmitted based on the indications of the DCI, alternatively.

The transmission mode for the second set of REs may be determined based on a physical layer signaling indication, which includes, but not limited to, determining whether data may be transmitted based on a DMRS port indication, for example, by adding rows with values 12,13,14 (indicating DMRS port with lower density, or sets of resource elements for transmitting the first category of demodulation reference signals) to an existing table. For example, the respective rows have values as shown in the following table. It should be noted that the values of the respective rows herein may be different from the table, as long as the DMRS port with lower density is added and the use of the DMRS port with lower density is determined using the table and the indications of the DCI is within the protection scope of the present disclosure, in connection with the transmission indications of Table 1.

**Table 1**

| Codeword 0 enabled, Codeword 1 disabled | | |
|---|---|---|
| Value | Number of DMRS CDM group(s) without data | DMRS port(s) |
| 0 | 1 | 0 |
| 1 | 1 | 1 |
| 2 | 1 | 0,1 |
| 3 | 2 | 0 |
| 4 | 2 | 1 |
| 5 | 2 | 2 |
| 6 | 2 | 3 |
| 7 | 2 | 0,1 |
| 8 | 2 | 2,3 |
| 9 | 2 | 0-2 |
| 10 | 2 | 0-3 |
| 11 | 2 | 0,2 |
| 12 | 2 | 2 |
| 13 | 2 | 3 |
| 14 | 2 | 2,3 |
| 15 | Reserved | Reserved |

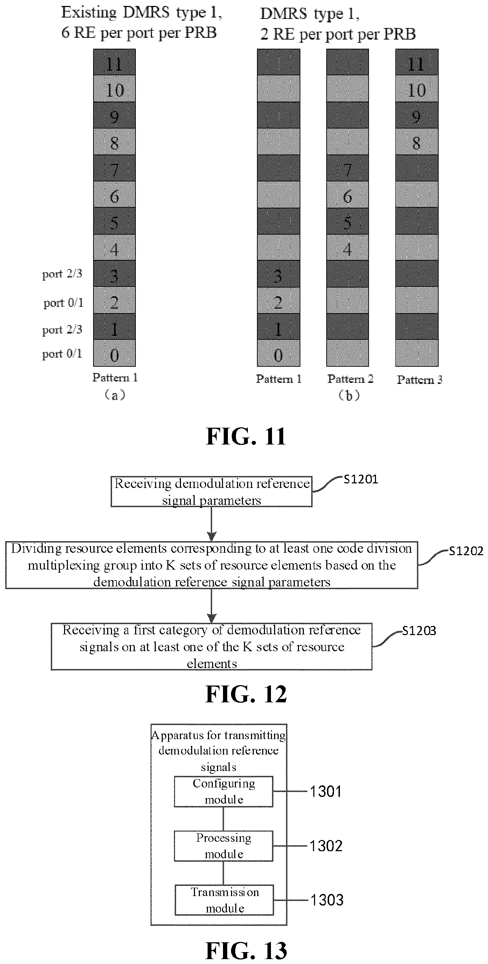

In one example, a subcarrier offset may be indicated by a DCI field. As shown in Table 2, a mapping relationship between different patterns and data transmissions may be indicated based on the DCI field, where a schematic comparison between the different patterns and an existing pattern is shown in FIG. 11, and in FIG. 11, (a) is a schematic diagram of an existing pattern, and (b) is a schematic diagram of 3 pattern styles of the DMRS type 1 occupying 2 REs per port on a symbol of a PRB.

**Table 2**

| Value | DMRS pattern | With data on other patterns |
|---|---|---|
| 0 | 1 | 2, 3 |
| 1 | 1 | 3 |
| 2 | 1 | null |
| 3 | 2 | 3 |
| 4 | 2 | null |
| 5 | 3 | null |

For example, it may be defined that the priorities of the above DMRS patterns are sorted in an order of values from small to large, i.e., a DMRS pattern of 1 has the highest priority and a DMRS pattern of 3 has the lowest priority. If pattern 3 is assigned to a second type of terminals, the remaining REs within the CDM group in which the DMRS port of that terminal is located are not used to transmit data. For example, a second type of terminals may be scheduled based on port 0, and the REs on {0,2,4,6} may be not used for transmission because it is considered by default that they have already been scheduled by that terminal on pattern1 and pattern 2. If pattern 1 is assigned to the second type of terminals, the remaining REs within the CDM group in which the DMRS port of that terminal is located need to be clarified whether they are available for transmission by an indication or a predefined manner, i.e., it is not certain whether other terminals are scheduling the REs on pattern 2 and pattern 3.

FIG. 12 is a flowchart of a method of transmitting demodulation reference signals provided by an embodiment of the present application, which may be performed in software and/or hardware by an apparatus for transmitting the demodulation reference signals, which may be integrated in a communication node (e.g., a device such as a user terminal) in a wireless communication network, for determining sets of resource elements for transmitting a first category of demodulation reference signals based on the obtained demodulation reference signal parameters, and receiving the first category of demodulation reference signals on the sets of resource elements. For high-performance terminals, the wireless communication performance can be guaranteed while reducing the density of REs for transmitting DMRS, and the reduction of the accuracy of channel estimation can be avoided. As shown in FIG. 12, the method may include, but is not limited to, the following:

S1201, transmitting demodulation reference signal parameters.

The embodiment of the present application may be performed by a terminal-side device in a wireless communication network, and an action of demodulation reference signal parameters transmission in this process may be understood as a communication node receiving demodulation reference signal parameters, for example, a device such as a user terminal receives demodulation reference signal parameters transmitted by a network-side device such as a base station, and in another embodiment, the demodulation reference signal parameters may comprise a spacing parameter L.

S1202, dividing resource elements corresponding to at least one code division multiplexing group into K sets of resource elements based on the demodulation reference signal parameters.

The spacing parameter L of the demodulation reference signal parameters may be used to divide the resource elements corresponding to the code division multiplexing group into the K sets of resource elements, wherein K is an integer greater than 1.

S1203, transmitting a first category of demodulation reference signals on at least one set of resource elements among the K sets of resource elements.

After dividing the resource elements corresponding to the code division multiplexing group into a plurality of sets of resource elements based on the demodulation reference signal parameters, the sets of resource elements with lower density of REs can be obtained, and the first category of demodulation reference signals may be received on the divided sets of resource elements. In this way, the wireless communication performance can be guaranteed while reducing the density of DMRS REs, and the reduction of the accuracy of channel estimation can be avoided.

For example, the above code division multiplexing group may be used to transmit a second category of demodulation reference signals on a set of resource elements, where the set of resource elements of the second category of demodulation reference signals may be understood as a set of REs with higher density, e.g., DMRS type 1 occupies 6 REs per port on a symbol of a PRB. The sets of resource elements for transmitting the first category of demodulation reference signals may be understood as sets of REs with lower density, i.e., the sets of resource elements obtained after dividing the set of resource elements for transmitting the second category of demodulation reference signals based on the spacing parameter L of the demodulation reference signal parameters, where a pattern corresponding to the sets of resource elements contains less number of REs on a symbol per PRB than the number of REs contained in a pattern corresponding to the set of resource elements of the second category of demodulation reference signals. It should be noted that in embodiments of the present application, a pattern corresponds to set(s) of resource elements for transmitting demodulation reference signals, where the pattern and the set(s) of resource elements for transmitting the demodulation reference signals may be interchangeable and belong to equivalent concepts.

It needs to be noted that the relevant actions or processes involved in the embodiments of the present application may be performed by a device such as a user terminal, and accordingly, the transmission action such as signal transmission may be understood as a receiving action, for example, in S 1203 described above, transmitting the first category of demodulation reference signals on at least one set of resource elements among the K sets of resource elements indicates receiving the first category of demodulation reference signals transmitted by the network-side device such as a base station on the at least one set of resource elements among the K sets of resource elements.

It can be understood that after dividing the resource elements corresponding to the code division multiplexing group based on the spacing parameter L, for the resource elements of the code division multiplexing group, respective resource elements spaced every L resource elements belong to one set of resource elements.

For example, after the above division, the values for the number of sets of resource elements K and the spacing parameter L may comprise at least one of the following: K=2, L=1; K=3, L=2; K=6, L=5; K=3, L=0; or K=2, L=0. And L=0 indicates that, as resource elements in the code division multiplexing group, the resource elements of corresponding sets of resource elements are adjacent to each other; or the REs of corresponding sets of resource elements are separated by one RE on the entire symbol.

In one example, the above demodulation reference signal parameters may further comprise a number of resource elements N in a set of resource elements, i.e., for resource elements corresponding to the code division multiplexing group, every N resource elements are generated as a set of resource elements, wherein K*N=T, T is the number of resource elements in the code division multiplexing group, and K and N are positive integers greater than 1, i.e., the number of resource elements in the code division multiplexing group is divided into K sets of resource elements, and each set of resource elements contains N resource elements.

For example, the values for the number of resource elements N in the set of resource elements and the number of the divided sets of resource elements K may comprise at least one of the following: N=2, K=3; N=3, K=2; N=4, K=2; or N=8, K=2. Here, the corresponding code division multiplexing group in both cases of N=4, K=2 and N=8, K=2 includes two DMRS symbols.

In one example, the demodulation reference signal parameters may further comprise an offset for the sets of resource elements, where the sets of resource elements for transmitting the first category of demodulation reference signals may be determined based on the offset for the sets of resource elements.

In one example, the above sets of resource elements for transmitting the first category of demodulation reference signals may further comprise a first set of resource elements (i.e., a first set of REs) and a second set of resource elements (i.e., a second set of REs), where the first set of resource elements is a set of resource elements used for transmitting the first category of demodulation reference signals, and the second set of resource elements is a set consisting of resource elements other than the first set of resource elements on the symbols in which the code division multiplexing group is located.

In an embodiment, the transmission mode for the second set of REs may be determined in any of the following ways, i.e., one of transmission of data, transmission of the first category of demodulation reference signals, or transmission of a second category of demodulation reference signals. For example, the transmission mode for the second set of REs may be determined in a default manner; alternatively, the transmission mode for the second set of REs may be determined based on at least one parameter of the first set of REs, the parameter comprises: a port index corresponding to the first set of REs, a pattern index corresponding to the first set of REs, and an offset for the first set of REs; alternatively, the transmission mode for the second set of REs may be determined based on a physical layer signaling indication.

FIG. 13 is a schematic diagram of a structure of an apparatus for transmitting demodulation reference signals provided by an embodiment of the present application, which may be integrated in a network device such as a base station side, as shown in FIG. 13, and the apparatus may include: a configuration module 1301, a processing module 1302, and a transmission module 1303; where the configuration module is used for configuring demodulation reference signal parameters; the processing module is used for dividing the resource elements corresponding to the at least one code division multiplexing group into K sets of resource elements based on the demodulation reference signal parameters, wherein K is an integer greater than 1; and the transmission module is used for transmitting a first category of demodulation reference signals on at least one set of resource elements among the K sets of resource elements. The transmission module in the above-described apparatus is mainly used to perform a transmitting action, i.e., transmitting the first category of demodulation reference signals can be understood as the transmission module transmitting the first category of demodulation reference signals.

In an embodiment, the above code division multiplexing group may be used to transmit the second category of demodulation reference signals on a set of resource elements.

In another embodiment, the demodulation reference signal parameters may comprises a spacing parameter L, which is used to divide the resource elements corresponding to the code division multiplexing group into the K sets of resource elements. That is, for the resource elements of the code division multiplexing group, respective resource elements spaced every L resource elements belong to one set of resource elements.

For example, the above number of sets of resource elements K and the spacing parameter L may comprise at least one of the following: K=2, L=1; K=3, L=2; K=6, L=5; K=3, L=0; or K=2, L=0.

In an embodiment, the demodulation reference signal parameters may further comprise a number of resource elements N in a set of resource elements, wherein K*N=T, T is the number of resource elements in the code division multiplexing group, and K and N are positive integers greater than 1.

For example, the above N and K may comprise at least one of the following: N=2, K=3; N=3, K=2; N=4, K=2; or N=8, K=2.

Further, the demodulation reference signal parameters may further comprise an offset for the sets of resource elements, which is used to determine the sets of resource elements for transmitting the first category of demodulation reference signals.

In one example, the above sets of resource elements for transmitting the first category of demodulation reference signals may comprise a first set of resource elements and a second set of resource elements, where the first set of resource elements is a set of resource elements for transmitting the first category of demodulation reference signals, and the second set of resource elements is a set consisting of resource elements other than the first set of resource elements on the symbols in which the code division multiplexing group is located.

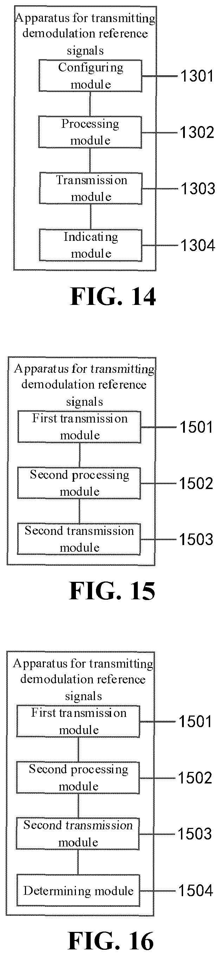

In another embodiment, as shown in FIG. 14, the above apparatus may further include an indication module 1304; where the indication module is used to indicate a transmission mode for the second set of REs based on any of the following ways: determining, in a default manner, the transmission mode for the second set of REs; determining the transmission mode for the second set of REs based on at least one parameter of the first set of REs, the parameter comprising a port index corresponding to the first set of REs, a pattern index corresponding to the first set of REs, and an offset for the first set of REs; or determining the transmission mode for the second set of REs based on a physical layer signaling indication.

The above transmission mode comprises one of the following: transmission of data, transmission of the first category of demodulation reference signals, or transmission of a second category of demodulation reference signals.

The apparatus for transmitting demodulation reference signals provided in the present embodiment is used to implement the method of transmitting demodulation reference signals of the embodiment shown in FIG. 1, and the principle of implementation and the technical effect thereof are similar and will not be repeated herein.

FIG. 15 is a schematic diagram of a structure of an apparatus for transmitting demodulation reference signals provided by an embodiment of the present application, which may be integrated in a device such as a user terminal, as shown in FIG. 15, and the apparatus may include: a first transmission module 1501, a second processing module 1502, and a second transmission module 1503; where the first transmission module is used for transmitting demodulation reference signal parameters; the second processing module is used for dividing resource elements corresponding to at least one code division multiplexing group into K sets of resource elements based on the demodulation reference signal parameters, wherein K is an integer greater than 1.

The second transmission module is used for transmitting a first category of demodulation reference signals on at least one set of resource elements among the K sets of resource elements.

The first transmission module and the second transmission module, as described above, are used for performing a receiving action, e.g., the first transmission module transmits demodulation reference signal parameters to indicate reception of the demodulation reference signal parameters by the first transmission module, and the second transmission module transmits the first category of demodulation reference signals to indicate reception of the first category of demodulation reference signals.

In an embodiment, the above code division multiplexing group may be used for transmitting a second category of demodulation reference signals on a set of resource elements.

In another embodiment, the demodulation reference signal parameters may comprise a spacing parameter L, which is used to divide the resource elements corresponding to the code division multiplexing group into the K sets of resource elements. That is, for the resource elements of the code division multiplexing group, respective resource elements spaced every L resource elements belong to one set of resource elements.

For example, the above number of sets of resource elements K and the spacing parameter L may comprise at least one of the following: K=2, L=1; K=3, L=2; K=6, L=5; K=3, L=0; or K=2, L=0.

In an embodiment, the demodulation reference signal parameters may further comprises a number of resource elements N in a set of resource elements, wherein K*N=T, T is the number of resource elements in the code division multiplexing group, and K and N are positive integers greater than 1.

For example, the above N and K may comprise at least one of the following: N=2, K=3; N=3, K=2; N=4, K=2; or N=8, K=2.

Further, the demodulation reference signal parameters may further comprise an offset for the sets of resource elements, which is used to determine the sets of resource elements for transmitting the first category of demodulation reference signals.

In one example, the above sets of resource elements for transmitting the first category of demodulation reference signals may comprise a first set of resource elements and a second set of resource elements, where the first set of resource elements is a set of resource elements used for transmitting the first category of demodulation reference signals, and the second set of resource elements is a set consisting of resource elements other than the first set of resource elements on the symbols in which the code division multiplexing group is located.

In another embodiment, as shown in FIG. 16, the above apparatus may further include a determination module 1504; where the determining module is used to determine a transmission mode for the second set of REs based on any of the following: determining the transmission mode for the second set of REs in a default manner; determining the transmission mode for the second set of REs based on at least one parameter of the first set of REs, the parameter comprising a port index corresponding to the first set of REs, a pattern index corresponding to the first set of REs, and an offset for the first set of REs; or determining the transmission mode for the second set of REs based on a physical layer signaling indication.

The above transmission mode comprises one of the following: transmission of data, transmission of the first category of demodulation reference signals, or transmission of a second category of demodulation reference signals.

The apparatus for transmitting demodulation reference signals provided in this embodiment is used to implement the method of transmitting demodulation reference signals of the embodiment shown in FIG. 12, and the principle of implementation and technical effect thereof are similar and will not be repeated herein.

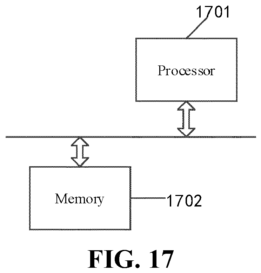

FIG. 17 is a schematic diagram of a structure of a communication node provided by an embodiment. As shown in FIG. 17, the node includes a processor 1701 and a memory 1702; the number of the processor 1701 in the node may be one or more, and one processor 1701 is taken as an example in FIG. 17; the processor 1701 and the memory 1702 in the node may be connected through a bus or other ways, and connection through a bus is taken as an example in FIG. 17.

The memory 1702 serves as a computer-readable storage medium that can be used to store software programs, computer-executable programs, and modules, such as program instructions/modules corresponding to the method of transmitting demodulation reference signals in the embodiment of FIG. 1 of the present application (e.g., the configuration module 1301, the processing module 1302, and the transmission module 1303 in the apparatus for transmitting demodulation reference signals). The processor 1701 implements the above method of transmitting demodulation reference signals by running software programs, instructions, and modules stored in the memory 1702.

The memory 1702 may primarily include a storage program area and a storage data area, wherein the storage program area may store an operating system, an application program required for at least one function; and the storage data area may store data created in accordance with the use of the set-top box, and the like. Additionally, the memory 1702 may include a high-speed random-access memory, and may also include a non-volatile memory, such as at least one disk memory device, a flash memory device, or other non-volatile solid state memory device.

In one example, when possible, the processor in the above node may also implement the above method of transmitting demodulation reference signals by means of hardware circuits, such as logic circuits, gate circuits, and the like, within it.

Embodiments of the present application also provide a readable and writable storage medium for computer storage, the storage medium storing one or more programs, the one or more programs being executable by one or more processors to perform the method of transmitting demodulation reference signals in the above embodiments.

It will be understood by one of ordinary skill in the art that all or some of the processes in the method disclosed above, the functional modules/units in the device may be implemented as software, firmware, hardware, and suitable combinations thereof.

In hardware implementations, a division between functional modules/units referred to in the above description does not necessarily correspond to a division of physical components; for example, one physical component may have multiple functions, or one function or process may be cooperatively performed by several physical components. Some or all of the physical components may be implemented as software executed by a processor, such as a central processor, a digital signal processor, or a microprocessor, or as hardware, or as integrated circuits, such as specialized integrated circuits. Such software may be distributed on a computer-readable medium, which may include a computer storage medium (or non-transitory medium) and a communication medium (or transitory medium). As is well known to those of ordinary skill in the art, the term computer storage medium includes volatile and non-volatile, removable and non-removable media implemented in any method or technique for storing information, such as computer-readable instructions, data structures, program modules, or other data. The computer storage medium includes, but are not limited to, RAM, ROM, EEPROM, flash memory or other memory technology, CD-ROM, Digital Versatile Disk (DVD) or other optical disk storage, magnetic cartridges, magnetic tapes, magnetic disk storage, or other magnetic storage devices, or any other medium that can be used to store desired information and that can be accessed by a computer. In addition, it is well known to those of ordinary skill in the art that the communication medium typically contain computer-readable instructions, data structures, program modules, or other data in a modulated data signal such as a carrier wave or other transmission mechanism, and may include any information delivery medium.

The above reference to the accompanying drawings illustrates only some exemplary embodiments of the present application and does not thereby limit the patent scope of the present application. Any modifications, equivalent substitutions and improvements made by a person skilled in the art without departing from the scope and substance of the present application shall be within the scope of the present application.

## Claims

1. A method of transmitting demodulation reference signals, comprising:
configuring demodulation reference signal parameters;
dividing resource elements corresponding to at least one code division multiplexing group into K sets of resource elements based on the demodulation reference signal parameters, wherein K is an integer greater than 1; and
transmitting a first category of demodulation reference signals on at least one set of resource elements among the K sets of resource elements.

2. The method of claim 1, wherein the code division multiplexing group is used for transmitting a second category of demodulation reference signals on a set of resource elements.

3. The method of claim 1, wherein the demodulation reference signal parameters comprise a spacing parameter L, and the spacing parameter is used to divide the resource elements corresponding to the code division multiplexing group into the K sets of resource elements.

4. The method of claim 3, wherein for the resource elements of the code division multiplexing group, respective resource elements spaced every L resource elements belong to one set of resource elements.

5. The method of claim 4, wherein K and L comprise at least one of the following: K=2, L=1; K=3, L=2; K=6, L=5; K=3, L=0; or K=2, L =0.

6. The method of claim 3, wherein the demodulation reference signal parameters further comprise a number of resource elements N in a set of resource elements, wherein K*N=T, T is a number of resource elements in the code division multiplexing group, and K and N are positive integers greater than 1.

7. The method of claim 6, wherein N and K comprise at least one of the following: N=2, K=3; N=3, K=2; N=4, K=2; or N=8, K=2.

8. The method of claim 6, wherein the demodulation reference signal parameters further comprise an offset for the sets of resource elements, and the offset for the sets of resource elements is used to determine the sets of resource elements for transmitting the first category of demodulation reference signals.

9. The method of claim 1, wherein the sets of resource elements for transmitting the first category of demodulation reference signals comprise a first set of resource elements and a second set of resource elements, the first set of resource elements is a set of resource elements for transmitting the first category of demodulation reference signals, and the second set of resource elements is a set consisting of resource elements other than the first set of resource elements on symbols in which the code division multiplexing group is located.

10. The method of claim 9, wherein the method further comprises indicating a transmission mode for the second set of resource elements based on any of the following:
determining, in a default manner, the transmission mode for the second set of resource elements;
determining the transmission mode for the second set of resource elements based on at least one parameter of the first set of resource elements, wherein the parameter comprises a port index corresponding to the first set of resource elements, a pattern index corresponding to the first set of resource elements, and an offset for the first set of resource elements; or
determining the transmission mode for the second set of resource elements based on a physical layer signaling indication.

11. The method of claim 10, wherein the transmission mode comprises one of the following: transmission of data, transmission of the first category of demodulation reference signals, or transmission of a second category of demodulation reference signals.

12. A method of transmitting demodulation reference signals, comprising:
transmitting demodulation reference signal parameters;
dividing resource elements corresponding to at least one code division multiplexing group into K sets of resource elements based on the demodulation reference signal parameters, wherein K is an integer greater than 1; and
transmitting a first category of demodulation reference signals on at least one set of resource elements among the K sets of resource elements.

13. The method of claim 12, wherein the code division multiplexing group comprises a set of resource elements for transmitting a second category of demodulation reference signals.

14. The method of claim 12, wherein the demodulation reference signal parameters comprise a spacing parameter L, and the spacing parameter is used to divide the resource elements corresponding to the code division multiplexing group into the K sets of resource elements.

15. The method of claim 14, wherein for the resource elements of the code division multiplexing group, respective resource elements spaced every L resource elements belong to one set of resource elements.

16. The method of claim 15, wherein K and L comprise at least one of the following: K=2, L=1; K=3, L=2; K=6, L=5; K=3, L=0; or K=2, L=0.

17. The method of claim 14, wherein the demodulation reference signal parameters further comprise a number of resource elements N in a set of resource elements, wherein K*N=T, T is a number of resource elements in the code division multiplexing group, and K and N are positive integers greater than 1.

18. The method of claim 17, wherein N and K comprise at least one of the following: N=2, K=3; N=3, K=2; N=4, K=2; or N=8, K=2.

19. The method of claim 17, wherein the demodulation reference signal parameters further comprise an offset for the sets of resource elements, and the offset for the sets of resource elements is used to determine the sets of resource elements for transmitting the first category of demodulation reference signals.

20. The method of claim 12, wherein the sets of resource elements for transmitting the first category of demodulation reference signals comprise a first set of resource elements and a second set of resource elements, the first set of resource elements is a set of resource elements for transmitting the first category of demodulation reference signals, and the second set of resource elements is a set consisting of resource elements other than the first set of resource elements on symbols in which the code division multiplexing group is located.

21. The method of claim 20, wherein the method further comprises determining a transmission mode for the second set of resource elements based on any of the following:
determining, in a default manner, the transmission mode for the second set of resource elements;
determining the transmission mode for the second set of resource elements based on at least one parameter of the first set of resource elements, wherein the parameter comprises a port index corresponding to the first set of resource elements, a pattern index corresponding to the first set of resource elements, and an offset for the first set of resource elements; or
determining the transmission mode for the second set of resource elements based on a physical layer signaling indication.

22. The method of claim 21, wherein the transmission mode comprises one of the following: transmission of data, transmission of the first category of demodulation reference signals, or transmission of a second category of demodulation reference signals.

23. A communication node comprising: a processor which when executing computer program implements the method of transmitting demodulation reference signals of any of claims 1-11, or the method of transmitting demodulation reference signals of any of claims 12-22.

24. A readable and writable storage medium, wherein the readable and writable storage medium has computer program stored thereon, which when executed by a processor implements the method of transmitting demodulation reference signals of any of claims 1-11, or the method of transmitting demodulation reference signals of any of claims 12-22.
